# EUROPEAN PATENT APPLICATION

(11) **EP 4 517 060 A1**
(43) Date of publication of application: **05.03.2025**
(21) Application number: 22940369.6
(22) Date of filing: 01.07.2022
(51) Int. Cl.: F01N 3/04, F01N 11/00, F01N 3/00, B01D 53/14, B01D 53/78, B01D 53/79, B01D 47/06

(54) **CARBON DIOXIDE CAPTURE AND CARBON RESOURCE UTILIZATION SYSTEM, FOR SHIP, USING SEAWATER AND FLUE GAS**

(30) Priority: 27.04.2022 KR 20220051954
(71) Applicant: Lowcarbon Co., Ltd., Seongjeon-myeon, Gangjin-gun Jeollanam-do 59205 (KR)
(72) Inventor: LEE, Cheol, Cheongju-si, Chungcheongbuk-do 28709 (KR)
(74) Representative: M. Zardi & Co S.A.
(86) International application number: PCT/KR2022/009525
(87) International publication number: WO 2023/210875

(57) **Abstract**

The present invention relates to a carbon dioxide capture and carbon resource utilization system, for ship, using seawater and flue gas. According to an embodiment of the present invention, the system comprises: a first reactor which sprays a basic alkali mixture solution containing seawater to flue gas emitted from a ship to capture carbon dioxide in the flue gas, collects a reaction product including the captured carbon dioxide, separates a carbon dioxide reaction product and a waste solution from the reaction product, collects and stores the carbon dioxide reaction product, and emits the collected carbon dioxide-removed residual flue gas; a second reactor which is formed as a tube entirely bent in a zigzag shape, a screw member being provided in the inner hollow of the tube in a longitudinal direction of the tube, wherein when the carbon dioxide reaction product introduced from the first reactor through an inlet of the tube is moved to an outlet of the tube, the carbon dioxide reaction product is mixed while rotating and flowing in a spiral direction by the screw member, to promote the precipitation of a carbonate; and a dehydrator which is provided at an outlet of the second reactor and extracts a carbonate powder by removing water from the carbonate solution precipitated in the second reactor.

## Description

### Technical Field

The present disclosure relates to a carbon dioxide capture and carbon resource utilization system using seawater and flue gas for ships. More particularly, the present disclosure relates to a carbon dioxide capture and carbon resource utilization system using seawater and flue gas for ships, the system being configured to capture and convert carbon dioxide in a flue gas from a ship into a carbon resource by spraying a basic alkali mixture solution including seawater while considering an environmental restriction condition of a ship different from on land, thereby being capable of removing carbon dioxide in the flue gas from the ship and also capable of utilizing carbon dioxide such that carbon dioxide is converted into other useful materials.

### Background Art

As the number of ships that are one of the means of transportation between countries is increasing exponentially, marine pollution and air pollution caused by oil and flue gas discharged from ships are accelerating global warming and destruction of the marine ecosystem.

In addition, in order to respond to climate change agreements, the Marine Environment Protection Committee (MEPC) of the International Maritime Organization (IMO) has required each state party to submit indexing evaluation results reports for six global warming gases including CO₂, CH₄, N₂O, HFC, PFC, SF₆, and so on according to the Kyoto protocol, so that the need for related research is becoming more prominent even in Korea.

Accordingly, there is a trend of change from existing Heavy Fuel Oil (HFO) and Marine Diesel Oil (MDO) to Liquefied Natural Gas (LNG). However, using LNG as a fuel can satisfy regulations related to NOₓ and SOₓ, but it is difficult to satisfy regulations related to carbon dioxide emissions that will be strengthened in the future.

In response, carbon dioxide treatment technologies such as Carbon Capture and Storage (CCS) in which carbon dioxide is captured from combustion gas and injected and stored in an underground place such as ocean, underground, and so on, Enhanced Oil Recovery (EOS) in which oil that remains in underground even after a first recovery or a second recovery is recovered by injecting carbon dioxide, and so on are used in a ship.

However, in order to treat carbon dioxide in a flue gas generated from a crude oil carrier ship, carbon dioxide that is generated is required to be captured and transported to the outside, so that there is a disadvantage that the cost is high and there is a disadvantage that a system such as a liquefaction process of carbon dioxide is complicated.

In addition, a carbon dioxide removal apparatus applied to a conventional ship is known to have a low carbon dioxide removal efficiency and have a high treatment cost, and there is a problem that the carbon dioxide removal apparatus is difficult to be mounted and operated on a ship with limited space.

Particularly, in order to treat carbon dioxide discharged from a ship, an environmental restriction condition of the ship is required to be considered, unlike on land. Specifically, when a ship is operated on seawater, the ship is shaking with the flow of seawater, so that uniform contact with gas and liquid may be difficult to be realized. Furthermore, considering that a reactor is used by being mounted on the ship, the reactor is required to be designed on a more compact scale.

Therefore, in consideration of the environmental restriction condition in the ship, there is an urgent need for a method to efficiently reduce carbon dioxide discharged from a ship with a simpler system configuration compared to a conventional technology.

### Disclosure

### Technical Problem

Accordingly, the present disclosure has been made keeping in mind the above problems occurring in the related art, and an objective of the present disclosure is to provide a carbon dioxide capture and carbon resource utilization system using seawater and flue gas for ships, the system being configured to capture and convert carbon dioxide in a flue gas from a ship into a carbon resource by using a basic alkali mixture solution including seawater while considering an environmental restriction condition of the ship different from on land, thereby being capable of removing carbon dioxide in the ship and also capable of utilizing carbon dioxide such that carbon dioxide is converted into other useful materials.

In addition, another objective of the present disclosure is to provide a carbon dioxide capture and carbon resource utilization system using seawater and flue gas for ships, the system being configured such that carbon dioxide and a basic alkali mixture solution including seawater are reacted with each other in a primary reactor and then a generated carbon dioxide reaction product is introduced into a secondary reactor for increasing reaction efficiency such that carbonate minerals are generated, thereby being capable of increasing carbonate conversion rate of carbon dioxide in the flue gas discharged from the ship while having a more compact scale and maintaining durability of the overall system on the ship.

The technical problems to be solved by the present disclosure are not limited to the above-mentioned problems, and other problems which are not mentioned will be clearly understood by those skilled in the art from the following description.

### Technical Solution

In order to achieve the objectives of the present disclosure, according to an aspect of the present disclosure, there is provided a carbon dioxide capture and carbon resource utilization system using seawater and flue gas for ships, the system including: a primary reactor configured to capture carbon dioxide in a flue gas by spraying a basic alkali mixture solution containing seawater to the flue gas discharged from a ship, configured to collect a reaction product containing the captured carbon dioxide, configured to separate a carbon dioxide reaction product and a waste solution from the reaction product, configured to collect and store the carbon dioxide reaction product, and configured to discharge a residual flue gas in which the captured carbon dioxide is removed; a secondary reactor formed as a tube which has an inner hollow provided with a screw member along a longitudinal direction of the tube, the secondary reactor being configured such that the carbon dioxide reaction product introduced from the primary reactor through an inlet of the tube is mixed while the carbon dioxide reaction product is rotating and flowing in a spiral direction by the screw member when the carbon dioxide reaction product is moved to an outlet of the tube, thereby promoting precipitation of a carbonate; and a dehydrator provided at an outlet of the secondary reactor and configured to extract carbonate powder by removing water from a carbonate solution precipitated from the secondary reactor.

In addition, according to an aspect, the primary reactor may include: a mixer configured to supply the basic alkali mixture solution; an absorption column configured to capture carbon dioxide in the flue gas by reacting the basic alkali mixture solution supplied from the mixer with the flue gas in which micro bubbles are formed by passing through a bubbler formed on a lower portion of the absorption column; a separator configured to collect the reaction product containing carbon dioxide captured in the absorption column and to separate the carbon dioxide reaction product and the waste solution from the reaction product; a carbon resource storage configured to store the separated carbon dioxide reaction product for resource utilization thereof; and a discharge part configured to discharge the residual flue gas in which carbon dioxide captured in the absorption column is removed.

In addition, according to an aspect, the mixer may be configured to generate the basic alkali mixture solution by mixing a basic alkaline solution supplied from a basic alkaline solution storage with water supplied from a seawater supply source of the ship.

In addition, according to an aspect, the basic alkaline solution and seawater may be mixed in a ratio of 1:1 to 1:5.

In addition, according to an aspect, an average pH of the basic alkali mixture solution may be pH 12 to pH 13.5.

In addition, according to an aspect, the basic alkali mixture solution may include: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; a crystallized synthetic zeolite manufactured from an alumina-based material, a silica-based material, and sodium hydroxide; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

In addition, according to an aspect, the absorption column may be configured to supply the basic alkali mixture solution from the mixer by using a plurality of nozzles mounted on an upper portion of the absorption column.

In addition, according to an aspect, the basic alkali mixture solution may be input by being adjusted through a valve in the mixer when a level of the basic alkali mixture solution in the absorption column is lowered to less than 90%, and inputting of the basic alkali mixture solution may be stopped and, at the same time, a basic alkaline solution and water may be mixed until a pH of the basic alkali mixture solution becomes pH 12 to pH 13.5 when the level of the basic alkali mixture solution becomes 100%.

In addition, according to an aspect, the bubbler may be configured to form flue gas micro bubbles by using the flue gas.

In addition, according to an aspect, the primary reactor may further include: a monitoring part configured to monitor a level and a pH of the basic alkali mixture solution in the absorption column; and a controller configured to adjust a supply amount of the basic alkali mixture solution by the monitoring part.

In addition, according to an aspect, the carbon dioxide reaction product may include sodium carbonate (Na₂CO₃), sodium bicarbonate (NaHCO₃), or potassium carbonate (K₂CO₃).

In addition, according to an aspect, a pH meter may be further provided adjacent to the outlet of the secondary reactor, and a pH inside the secondary reactor may be monitored in real time by the pH meter.

In addition, according to an aspect, the dehydrator may include: a discharge pipe connected to the outlet of the secondary reactor; a separation membrane provided in a hollow of the discharge pipe and provided with a plurality of filter holes so that the carbonate solution containing carbonate powder having a particle size equal to or less than a predetermined particle size is filtered and extracted, the carbonate solution being precipitated from the secondary reactor; and a drying part configured to remove moisture by spraying dry air to the carbonate solution that has passed through the separation membrane, thereby acquiring carbonate powder.

In addition, according to an aspect, vibration may be continuously or selectively applied to the separation membrane, thereby detaching carbonate powder trapped in the filter holes from the filter holes or preventing carbonate powder from being trapped in the filter holes.

In addition, according to an aspect, a flow rate control pump for controlling a flow rate or a flow speed of the carbon dioxide reaction product introduced into an inlet of the secondary reactor may further be provided between the primary reactor and the secondary reactor.

In addition, according to an aspect, in the absorption column, carbon dioxide transferred from the flue gas in the ship may be atomized into micro bubbles by passing through a mesh net mounted on the lower portion of the absorption column, the basic alkali mixture solution supplied inside the absorption column from the mixer through a pipe may be sprayed upwardly as a fountain shape through a plurality of nozzles which is mounted on a first side of the pipe and which is disposed to be spaced apart from each other at a predetermined distance and then the basic alkali mixture solution may be atomized into micro droplets, and carbon dioxide may be captured as the basic alkali mixture solution that is atomized reacts with carbon dioxide that is atomized, the pipe being mounted such that the pipe crosses an upper portion of the absorption column.

In addition, according to an aspect, the secondary reactor may be a tube bent in a generally zigzag shape.

### Advantageous Effects

According to embodiments of the present disclosure, the following effects may be realized. However, the embodiments may not include all these effects, and a claim scope of the present disclosure is not construed as being limited thereto.

According to an embodiment of the present disclosure, since carbon dioxide in a flue gas is captured and converted into a carbon resource by spraying the basic alkali mixture solution including seawater while considering the environmental restriction condition of the ship different from on land, carbon dioxide in the ship is capable of being removed and also carbon dioxide is capable of being utilized such that carbon dioxide is converted into other useful materials such as sodium carbonate or sodium bicarbonate.

In addition, according to an embodiment of the present disclosure, after carbon dioxide and the basic alkali mixture solution are reacted with each other in the primary reactor, sodium carbonate or sodium bicarbonate that is a generated carbon dioxide reaction product is introduced into the secondary reactor together with seawater such that carbonate minerals are generated, so that carbonate conversion rate of carbon dioxide in the flue gas discharged from the ship may be increased while having a more compact scale and maintaining durability of the overall system on the ship.

As described above, according to an embodiment of the present disclosure, the present disclosure contributes to the reduction of greenhouse gases, and manufactures carbonate utilized in various industrial fields such as food additives, detergents, soap raw materials, high-tech medical industries, wastewater treatment, and so on, so that a profit-generating effect may also be expected.

### Description of Drawings

FIG. 1 is a conceptual view illustrating a carbon dioxide capture and carbon resource utilization system using seawater and flue gas for ships according to an embodiment of the present disclosure.
FIG. 2 is a view illustrating a primary reactor according to an embodiment of the present disclosure.
FIG. 3 is a view illustrating an internal configuration of a secondary reactor and a dehydrator according to an embodiment of the present disclosure.
FIG. 4 is a view schematically illustrating a configuration of an absorption column for improving carbon dioxide capture performance of the primary reactor according to another embodiment of the present disclosure.

### Mode for Invention

Since the present disclosure may be variously modified and have several exemplary embodiments, specific exemplary embodiments will be shown in the accompanying drawings and be described in detail in a detailed description.

However, it should be understood that the specific embodiments according to the concept of the present disclosure are not limited to the embodiments which will be described hereinbelow with reference to the accompanying drawings, but all of modifications, equivalents, and substitutions are included in the scope and spirit of the present disclosure.

It is to be understood that terms such as "including", "having", and so on are intended to indicate the existence of the features, numbers, steps, actions, elements, components, or combinations thereof disclosed in the specification, and are not intended to preclude the possibility that one or more other features, numbers, steps, actions, elements, components, or combinations thereof may exist or may be added.

Hereinafter, a carbon dioxide capture and carbon resource utilization system using seawater and flue gas for ships according to an embodiment of the present disclosure will be described in more detail with reference to the following drawings.

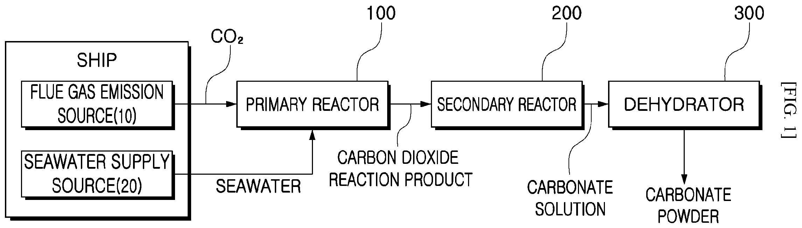

FIG. 1 is a conceptual view illustrating a carbon dioxide capture and carbon resource utilization system using seawater and flue gas for ships according to an embodiment of the present disclosure.

Referring to FIG. 1, a carbon dioxide capture and carbon resource utilization system using seawater and flue gas for ships according to an embodiment of the present disclosure is a system configured to use carbon dioxide in a flue gas generated from a boiler, an incinerator, or an engine of a ship such that a carbon dioxide reaction product containing sodium carbonate (Na₂CO₃), sodium bicarbonate (NaHCO₃), or potassium carbonate (K₂CO₃) that is a useful material is generated, the system being capable of increasing generation efficiency of carbonate minerals through a reaction between the generated carbon dioxide reaction product and seawater. Furthermore, the system may include a primary reactor 100 connected to a flue gas emission source and a seawater supply source, a secondary reactor 200 connected to the primary reactor, and a dehydrator 300 connected to an outlet of the secondary reactor 200. In addition, the system may further include a flow rate control pump 400 selectively.

The flow rate control pump 400 is configured to perform a function for controlling a flow rate and a flow speed of a carbon dioxide reaction product that flows and remains along an inner portion of the secondary reactor 200.

For example, the flow rate control pump 400 may control the retention and the secondary reaction time of the carbon dioxide reaction product within three minutes before the carbon dioxide reaction product supplied to an inlet of the secondary reactor 200 exits the outlet of the secondary reactor 200.

In the primary reactor 100, the primary reactor 100 may receive a flue gas discharged from a ship and may capture carbon dioxide in the flue gas by reacting the flue gas with a basic alkali mixture solution, may collect a reaction product containing the captured carbon dioxide, may separate a carbon dioxide reaction product and a waste solution from the reaction product, may collect and store the carbon dioxide reaction product, and may discharge a residual flue gas in which the captured carbon dioxide is removed.

Here, the carbon dioxide reaction product includes sodium carbonate (Na₂CO₃), sodium bicarbonate (NaHCO₃), or potassium carbonate (K₂CO₃), which is a useful carbon resource.

Firstly, the carbon dioxide capture and carbon resource utilization system using seawater and flue gas for ships according to an embodiment of the present disclosure is provided with the primary reactor 100.

The primary reactor 100 is configured to receive seawater from the seawater supply source of the ship, i.e., from a configuration such as a seawater storage tank, a pump, and so on as an example, and is configured to react seawater with a flue gas supplied from the flue gas emission source of the ship, i.e., with a flue gas supplied from a boiler, an engine, and so on of the ship, thereby removing carbon dioxide contained in the flue gas during the reaction process.

Specifically, the primary reactor 100 is configured to spray a basic alkali mixture solution in which seawater in the ship and a basic alkali mixture solution are mixed with each other to the flue gas discharged from the ship, thereby capturing carbon dioxide in the flue gas. Then, the primary reactor 100 collects a reaction product including the captured carbon dioxide, separates a carbon dioxide reaction product and a waste solution from the reaction product, and collects and stores the carbon dioxide reaction product, and discharges a residual flue gas in which the captured carbon dioxide is removed.

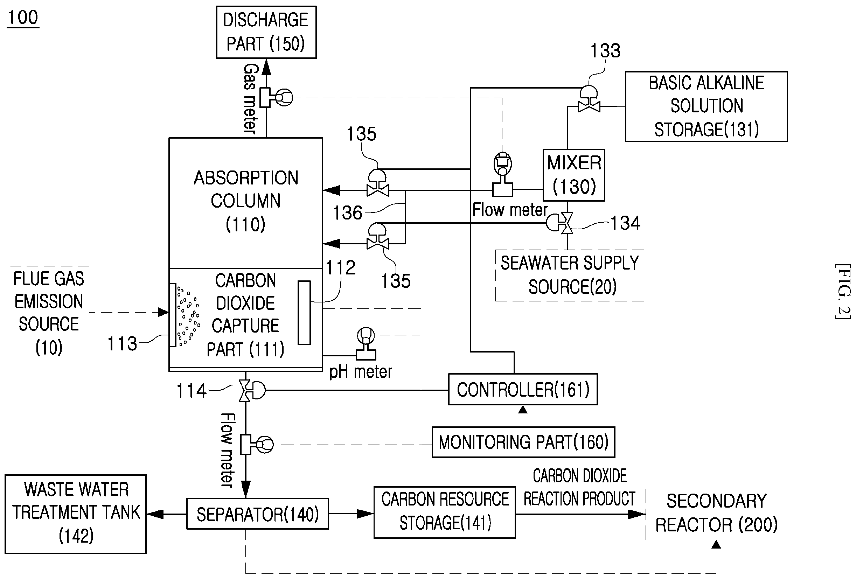

The detailed configuration of the primary reactor 100 will be described in more detail with reference to FIG. 2 which will be described later.

FIG. 2 is a view illustrating the primary reactor according to an embodiment of the present disclosure.

Referring to FIG. 2, the primary reactor 100 according to an embodiment of the present disclosure may have a structure capable of reducing carbon dioxide by capturing carbon dioxide in a flue gas discharged from a ship and capable of performing carbon utilization by using the captured carbon dioxide such that the captured carbon dioxide is converted into sodium carbonate, sodium bicarbonate, or potassium carbonate.

Specifically, the primary reactor 100 according to an embodiment of the present disclosure is a reactor configured to capture carbon dioxide in a flue gas discharged from a ship by using a basic alkali mixture solution in which seawater on the ship and a basic alkali mixture solution are mixed with each other. Furthermore, the primary reactor 100 includes an absorption column 110, a carbon dioxide capture part 111, a mixer 130, a separator 140, a carbon resource storage 141, and a discharge part 150.

The absorption column 110 may refer to a facility, a building, equipment, and so on configured to capture carbon dioxide. In addition, the carbon dioxide capture part 111 positioned on a lower end of the absorption column 110 is a portion of the absorption column 110, and may refer to a portion where carbon dioxide is captured by bubbling a flue gas.

The absorption column 110 includes the carbon dioxide capture part 111 at the lower end of the absorption tower 110, and is configured to capture only carbon dioxide in the flue gas by reacting the basic alkali mixture solution with the flue gas (micro bubbles of the flue gas), the flue gas being discharged from the ship. After carbon dioxide in the flue gas is captured, the flue gas in which carbon dioxide is removed may remain in a gaseous state in the absorption column 110.

A nozzle is mounted on an upper portion of the absorption column 110, a basic alkali mixture solution is sprayed inside the absorption column 110 through the nozzle from the mixer 130, and the basic alkali mixture solution is collected in the carbon dioxide capture part 111 positioned at the lower end of the absorption column 110.

At the same time as the basic alkali mixture solution is sprayed, the flue gas supplied from a flue gas emission source 120 passes through a bubbler 113 in the carbon dioxide capture part 111 at the lower portion of the absorption column 110, the flue gas in which micro bubbles are formed is supplied, and the basic alkali mixture solution and the micro bubbles of the flue gas react with each other within the carbon dioxide capture part 111, so that carbon dioxide is captured. When the flue gas reacts with the basic alkali mixture solution, the micro bubbles are formed while the flue gas passes through the bubbler 113 having fine holes formed on an outlet of the flue gas emission source 120.

As the flue gas supplied from the flue gas emission source 120 passes through the bubbler 113, the bubbler 113 may form the micro bubbles in the flue gas. Furthermore, the smaller the size of the micro bubbles, the larger the reaction area of the flue gas and the alkaline solution, so that the carbon dioxide capture ability may be increased. For example, the micro bubbles may refer to bubbles which have a size about equal to or less than 50 *µ*m and which exist in an aqueous solution.

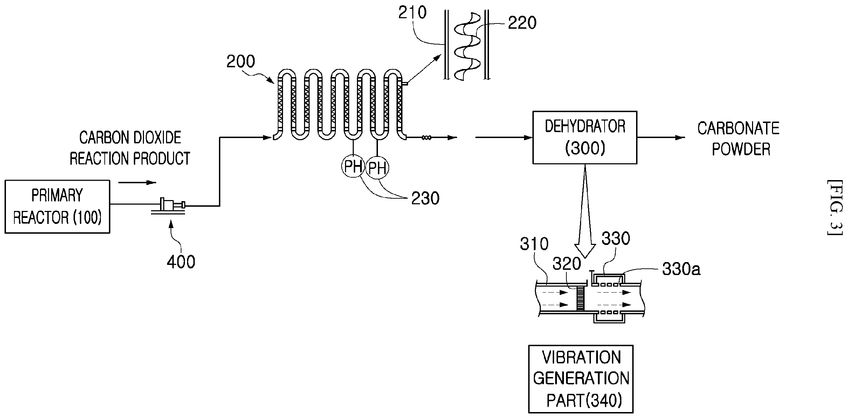

In addition to the bubbler 113, as illustrated in FIG. 3, the absorption column 110 may be provided with a sparger 122 having a plurality of flue gas outlets through which the flue gas is discharged, and a diameter of the plurality of flue gas outlets is 2 *µ*m to 50 *µ*m.

In addition, the absorption column 110 may include a level indicator 112 inside the absorption column 110, so that a level of a solution in the absorption column 110 is capable of being detected.

The nozzle may include a plurality of nozzles, and may be formed of at least one stage. The nozzle is connected to the mixer 130, and may supply a basic alkali mixture solution from the mixer 130.

According to an embodiment, the mixer 130 generates a basic alkali mixture solution by mixing a basic alkaline solution supplied from a basic alkali solution storage 131 with water supplied from a seawater supply source 20 of the ship.

The absorption columns 110 may be configured in series, in parallel, or in a series and parallel complex arrangement.

For example, the absorption columns 110 may be arranged in series when the flow velocity of the flue gas is high. When carbon dioxide unreacted due to a high flow velocity is discharged from the absorption columns, the absorption columns may be mounted in series so as to capture the unreacted carbon dioxide.

In addition, for example, the absorption column 110 may be arranged in parallel when the flow rate of the flue gas is large. When the flow rate of the flue gas exceeds the amount that the absorption column can capture, the amount of carbon dioxide that can be captured may be increased by arranging the absorption column in parallel.

The flue gas emission source 120 may utilize all gases that discharge carbon dioxide. According to an embodiment of the present disclosure, the flue gas may be a flue gas discharged from a boiler, an incinerator, or an engine of the ship.

The mixer 130 mixes the basic alkaline solution supplied from the basic alkaline solution storage 131 with seawater supplied from the seawater supply source 20, and supplies the mixture to the nozzle of the absorption column 110.

The basic alkali mixture solution in which the basic alkaline solution and water are mixed with each other may be supplied by using a separately connected by-pass line 136 when a supply amount or a required amount of the basic alkali mixture solution is increased.

The basic alkaline solution and water may be mixed in a ratio of 1:1 to 1:5. For example, the basic alkaline solution and water may be mixed in a ratio of 1:1 to 1:4, 1:1 to 1:3, 1:1 to 1:2, 1:2 to 1:5, 1:2 to 1:3, or 1:3 to 1:5.

A carbon dioxide capture rate may be increased as the basic alkali mixture solution mixing ratio of the basic alkaline solution and water is increased, but the mixing ratio of water may be adjusted in consideration of the cost aspect.

The basic alkali mixture solution may include: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; a crystallized synthetic zeolite manufactured from an alumina-based material, a silica-based material, and sodium hydroxide; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

The seawater supply source 20 may include all water that may be easily acquired at a system installation site, and water may be seawater as an example.

An average pH of the basic alkali mixture solution may be at least pH 12. For example, the pH may be pH 12 to pH 13.5, pH 13, pH 12, pH 12.1, pH 12.2, or pH 12.3. The pH of the basic alkali mixture solution may be measured by a pH meter in the absorption column 110, and carbon dioxide cannot be captured anymore when the pH of the basic alkali mixture solution in the absorption column 110 is less than pH 10.5. Therefore, in order to adjust the pH of the basic alkali mixture solution, the basic alkaline solution and water may be supplied to the mixer 130 by adjusting the amount of the basic alkaline solution and the amount of water from zero to 100% by each valve 133 and 134.

When the level of the basic alkali mixture solution in the absorption column 110 is lower than 90% (measured by the level indicator), the input of the basic alkali mixture solution may be adjusted through a valve 135 at the mixer 130 so that the basic alkali mixture solution is input. Furthermore, when the level of the solution reaches 100%, the input of the basic alkali mixture solution may be stopped. At the same time, the basic alkaline solution and water may be mixed until the pH of the basic alkaline mixture solution becomes pH 12 to pH 13.5.

Since the amount of basic alkali mixture solution supplied to the absorption column 110 and the amount of a solution discharged from the separator 140 are the same, a carbon dioxide capture system is capable of being continuously maintained. Therefore, the valve 135 (including a bypass valve if necessary) may be adjusted such that the same amount of the basic alkali mixture solution as a value of a flow meter mounted in a line from the absorption column 110 to the separator 140 is supplied to the absorption column 110 so that the net flow is adjusted to zero.

The reaction product containing carbon dioxide captured by reacting the basic alkali mixture solution and the flue gas with each other is collected in the carbon dioxide capture part 111 of the absorption column 110, the carbon dioxide reaction product and the waste solution from the reaction product are moved to the separator 140 through a valve 114, and the carbon dioxide reaction product and the waste solution are separated from the reaction product For example, the separator 140 may be configured to perform the separation by using a centrifugal separation method.

The separated carbon dioxide reaction product may be moved to the carbon resource storage 141 and the secondary reactor 200, or may be collected and directly moved to the secondary reactor 200 and may react with seawater in the secondary reactor 200. Here, the carbon dioxide reaction product may include sodium carbonate (Na₂CO₃) or sodium bicarbonate (NaHCO₃).

As described in Formula 1 below, the carbon dioxide reaction product may be formed by reacting the basic alkali mixture solution with carbon dioxide.

<Formula 1> 2NaOH + CO₂ → Na₂CO₃ + H₂O Na₂CO₃ + H₂O + CO₂ → 2NaHCO₃

In the reaction product, a waste solution other than a carbon dioxide reaction product is moved to a wastewater treatment tank 142 and then is discarded. For example, the waste solution may contain illite minerals, water, and so on that are contained in the basic alkali mixture solution that has finished a catalyst function.

The residual flue gas in which carbon dioxide is removed after carbon dioxide is captured in the carbon dioxide capture part 111 is discharged through the discharge part 150. For example, the residual flue gas discharged through the discharge part 150 may include the flue gas in which carbon dioxide is removed and may include some small amounts of uncaptured carbon dioxide.

At this time, since the concentration of carbon dioxide cannot exceed the regulatory standard value when the residual flue gas is discharged, the residual flue gas that does not exceed a standard (the standard set by a manager after the concentration of carbon dioxide in the atmosphere is measured) may be discharged on the basis of the concentration of carbon dioxide in the atmosphere to which the residual flue gas is discharged.

The primary reactor 100 may further include: a monitoring part 160 configured to monitor a level and a pH of the basic alkali mixture solution in the absorption column; and a controller 161 configured to adjust a supply amount of the basic alkali mixture solution by the monitoring part 160.

Values of a gas meter, a pH meter, and a flow meter measured in all processes of the primary reactor 100 are managed in the monitoring part 160, and the controller 161 performs adjustment on the basis of the values represented by the monitoring part 160. The valves 114, 133, 134, and 135 may be adjusted in terms of percentage with respect to values input from the controller 161.

FIG. 3 is a view illustrating an internal configuration of a secondary reactor and a dehydrator according to an embodiment of the present disclosure.

Referring to FIG. 3, the secondary reactor 200 is provided such that the secondary reactor 200 is connected to the outlet of the primary reactor 100.

The secondary reactor 200 performs a function of precipitating a carbonate from the carbon dioxide reaction product described above, the carbonate being a useful carbon resource.

Specifically, the secondary reactor 200 is formed of a tube 210 bent in a generally zigzag shape, and an inner hollow of the tube 210 is provided with a screw member 220 along a longitudinal direction of the tube 210.

Accordingly, when the carbon dioxide reaction product introduced from the primary reactor 100 through the inlet of the secondary reactor 200 (left end in FIG. 3) is moved to the outlet of the tube 210, the carbon dioxide reaction product is agitated by the screw member 220 in a spiral direction, thereby facilitating precipitation of a carbonate solution.

Specifically, when the carbon dioxide reaction product such as sodium carbonate, sodium bicarbonate, or calcium carbonate is introduced through a carbon dioxide reaction product inlet of the secondary reactor 200 (left end in FIG. 3), the carbon dioxide reaction product is mixed with seawater, so that a reaction as described in <Formula 2> below is performed.

At this time, carbonate ions or bicarbonate ions from sodium carbonate or sodium bicarbonate react with metal cations such as sodium ions (Na⁺), calcium ions (Ca²⁺) and so on abundantly dissolved in seawater in ionic form, so that carbonate minerals are precipitated.

<Formula 2> HCO₃⁻ + Ca²⁺ → CaCO₃ + H⁺ or CO₃²⁻ + Ca²⁺ → CaCO₃ HCO₃²⁻ + Na⁺ → NaCO₃ + H⁺ or CO₃⁺ + Na⁺ → NaCO₃

Carbonate minerals generated in the secondary reactor 200 may be calcium carbonate (CaCO₃), sodium carbonate (NaCO₃), and so on, and may be a mixture thereof. The type of generated carbonate minerals may vary according to the type of cations contained in seawater. Generally, when seawater is used, calcium carbonate (CaCO₃) and sodium carbonate (NaCO₃) may be mainly generated.

In addition, at least one pH meter 230 may be further provided on a first side of the tube 210 adjacent to the outlet of the secondary reactor 200 (right end in FIG. 3).

The pH meter 230 monitors the pH of the carbon dioxide reaction product inside the secondary reactor 200 in real time. For example, the pH of the carbonate solution that is discharged at a time when the carbonization reaction of the reaction product is ended in the secondary reactor 200 may be maintained at pH 6 to pH 7.

In order to maintain an appropriate pH for promoting precipitation of the carbonate, the flow rate and the flow speed may be controlled by the flow rate control pump 400.

As described above, in the present disclosure, the conversion rate of carbonate minerals may be increased by adjusting the flow rate, the flow speed, and the retention time of the carbon dioxide reaction product for precipitation of carbonate minerals through the flow rate control pump 400, and the reaction environment inside the secondary reactor 200 may be maintained in an optimal condition by monitoring the pH inside the secondary reactor 200 in real time.

In addition, the dehydrator 300 is provided such that the dehydrator 300 is connected to the outlet of the secondary reactor 200.

The dehydrator 300 performs a function for extracting carbonate powder by removing water from the carbonate solution that is precipitated from the secondary reactor 200.

According to an embodiment, looking at the configuration of the dehydrator 300, the dehydrator 300 is provided with a discharge pipe 310 connected to the outlet of the secondary reactor 200.

In addition, an inner hollow of the discharge pipe 310 is provided with a separation membrane 320 for filtering out carbonate particles having a predetermined size.

At this time, the separation membrane 320 has a plurality of filter holes such that a carbonate solution containing carbonate particles which have a diameter equal to or less than a predetermined diameter and which are precipitated in the secondary reactor 200 is filtered and then extracted.

For example, the diameter of the filter hole may be 10 *µ*m to 20 *µ*m and, accordingly, only carbonate particles having a particle size equal to or more than 10 *µ*m and equal to or less than 20 *µ*m are selectively transmitted through the separation membrane 320.

In addition, a drying part 330 is further provided around a circumference of a downstream side of the discharge pipe 310 passing through the separator 320.

The drying part 330 performs a function for acquiring carbonate powder by removing moisture by spraying dry air to the carbonate solution passing through the separation membrane 320.

For example, referring to FIG. 3, the drying part 330 may be a rectangular air injection pipe bonded around the circumference of the discharge pipe 310, and a plurality of through-holes 330a is formed on a circumferential surface of the discharge pipe 310 that is bonded to the air injection pipe so that dry air is capable of being injected inside the discharge pipe 310.

Therefore, the carbonate solution introduced through the inlet of the discharge pipe 310 of the dehydrator 300 (left end in FIG. 3) passes through the separation membrane 320 and then is filtered out such that only carbonate particles having the particle size equal to or less than the predetermined particle size pass through the separation membrane 320. Then, moisture is removed while the carbonate particles pass through the drying part 330, so that carbonate powder having a uniform particle size is finally discharged to the outlet of the dehydrator (right end in FIG. 3).

In addition, a vibration generation part 340 may further be provided on the separation membrane 320.

The vibration generation part 340 performs a function for continuously or selectively applying vibration to the separation membrane 320, thereby preventing carbonate powder from being trapped in the filter hole of the separation membrane 320 or detaching carbonate powder trapped in the filter hole.

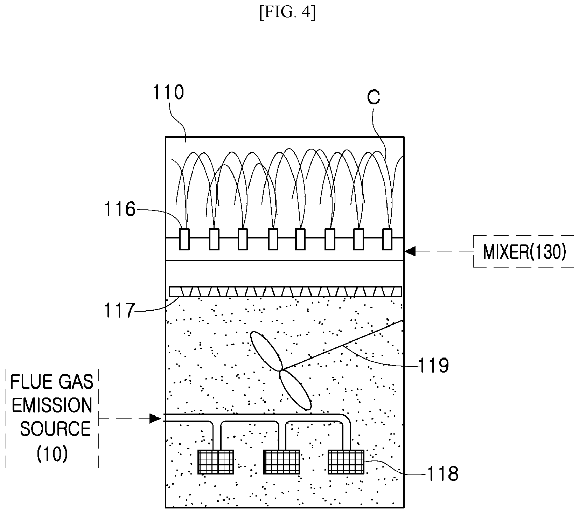

FIG. 4 is a view schematically illustrating a configuration of an absorption column for improving carbon dioxide capture performance of the primary reactor according to another embodiment of the present disclosure.

Referring to FIG. 4, in the configuration of the absorption 110 column according to another embodiment of the present disclosure, in addition to the configuration according to an embodiment illustrated in FIG. 2, a configuration for promoting a reaction between carbon dioxide and the basic alkali mixture solution may be added.

In the absorption column 110 according to another embodiment, carbon dioxide transferred from the flue gas emission source 120 passes through a mesh net 118 mounted on the lower portion of the absorption column 110, and is atomized into micro bubbles.

In addition, the basic alkali mixture solution supplied to the inside of the absorption column 110 from the mixer 130 through a pipe 115 is sprayed upwardly as a fountain shape through a plurality of nozzles 116 mounted on a first side of the pipe 115 by being spaced apart from each other at a predetermined distance, and then the basic alkali mixture solution is atomized into micro droplets, the pipe 115 being mounted such that the pipe 115 crosses the upper portion of the absorption column 110.

In addition, the micro droplet member 117 may be further provided between the mesh net 118 and the pipe 115 so as to allow micro droplets in the atomized basic alkali mixture solution having a size smaller than a predetermined size to pass therethrough.

As previously described in an embodiment in FIG. 2, micro bubbles and micro droplets generated by the mesh net 118 and the micro droplet member 117 may increase a reaction surface area between carbon dioxide and the alkaline solution as the size of the micro bubbles and micro droplets decrease, thereby being capable of increasing the carbon dioxide capture performance. For example, the micro bubbles and the micro droplets may have a size of about 50 *µ*m or less.

Then, as described above, the basic alkali mixture solution atomized into the micro droplets actively captures carbon dioxide as the reaction is promoted through contact with the atomized carbon dioxide which has been atomized by the mesh net 118.

In addition, an agitator 119 for promoting the reaction by increasing fluidity of the atomized carbon dioxide and the atomized basic alkali mixture solution may further be provided between the mesh 118 and the pipe 115.

The agitator 119 may further promote the reaction between the two materials by increasing the retention time and the contact time of the atomized basic alkali mixture solution and the atomized carbon dioxide by being rotated in a propeller shape.

Although embodiments of the present disclosure have been described for illustrative purposes, those skilled in the art will appreciate that various modifications, additions and substitutions are possible, without changing the spirit or essential features of the present disclosure. Therefore, it should be understood that the embodiments described above are illustrative in all respects and not restrictive. The scope of the present specification is characterized by the appended claims rather than the detailed description described above, and it should be construed that all alterations or modifications derived from the meaning and scope of the appended claims and the equivalents thereof fall within the scope of the present specification.

Meanwhile, the exemplary embodiments of the present specification are disclosed in the present specification and the drawings, and specific terms are used, but the specific terms are used as general meanings merely for easily explaining the technical contents of the present specification and helping understand the present disclosure, but not intended to limit the scope of the present specification. It is obvious to those skilled in the art to which the present specification pertains that other modified embodiments may be carried out on the basis of the technical spirit of the present specification in addition to the exemplary embodiments disclosed herein.

### Industrial Applicability

The present disclosure may be widely used in the field of carbon dioxide capture and carbon resource utilization system using seawater and flue gas for ships.

## Claims

1. A carbon dioxide capture and carbon resource utilization system using seawater and flue gas for ships, the system comprising:
a primary reactor configured to capture carbon dioxide in a flue gas by spraying a basic alkali mixture solution containing seawater to the flue gas discharged from a ship, configured to collect a reaction product containing the captured carbon dioxide, configured to separate a carbon dioxide reaction product and a waste solution from the reaction product, configured to collect and store the carbon dioxide reaction product, and configured to discharge a residual flue gas in which the captured carbon dioxide is removed;
a secondary reactor formed as a tube which has an inner hollow provided with a screw member along a longitudinal direction of the tube, the secondary reactor being configured such that the carbon dioxide reaction product introduced from the primary reactor through an inlet of the tube is mixed while the carbon dioxide reaction product is rotating and flowing in a spiral direction by the screw member when the carbon dioxide reaction product is moved to an outlet of the tube, thereby promoting precipitation of a carbonate; and
a dehydrator provided at an outlet of the secondary reactor and configured to extract carbonate powder by removing water from a carbonate solution precipitated from the secondary reactor.

2. The system of claim 1, wherein the primary reactor comprises:
a mixer configured to supply the basic alkali mixture solution;
an absorption column configured to capture carbon dioxide in the flue gas by reacting the basic alkali mixture solution supplied from the mixer with the flue gas in which micro bubbles are formed by passing through a bubbler formed on a lower portion of the absorption column;
a separator configured to collect the reaction product containing carbon dioxide captured in the absorption column and to separate the carbon dioxide reaction product and the waste solution from the reaction product;
a carbon resource storage configured to store the separated carbon dioxide reaction product for resource utilization thereof; and
a discharge part configured to discharge the residual flue gas in which carbon dioxide captured in the absorption column is removed.

3. The system of claim 2, wherein the mixer is configured to generate the basic alkali mixture solution by mixing a basic alkaline solution supplied from a basic alkaline solution storage with water supplied from a seawater supply source of the ship.

4. The system of claim 1, wherein a basic alkaline solution and seawater are mixed in a ratio of 1:1 to 1:5.

5. The system of claim 3, wherein an average pH of the basic alkali mixture solution is pH 12 to pH 13.5.

6. The system of claim 1, wherein the basic alkali mixture solution comprises:
at least one oxide selected from a group consisting of SiO₂, Al₂O₃, Fe₂O₃, TiO₂, MgO, MnO, CaO, Na₂O, K₂O, and P₂O₃;
at least one metal selected from a group consisting of Li, Cr, Co, Ni, Cu, Zn, Ga, Sr, Cd, and Pb;
a crystallized synthetic zeolite manufactured from an alumina-based material, a silica-based material, and sodium hydroxide; and
at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

7. The system of claim 2, wherein the absorption column is configured to supply the basic alkali mixture solution from the mixer by using a plurality of nozzles mounted on an upper portion of the absorption column.

8. The system of claim 2, wherein the basic alkali mixture solution is input by being adjusted through a valve in the mixer when a level of the basic alkali mixture solution in the absorption column is lowered to less than 90%, and inputting of the basic alkali mixture solution is stopped and, at the same time, a basic alkaline solution and water are mixed until a pH of the basic alkali mixture solution becomes pH 12 to pH 13.5 when the level of the basic alkali mixture solution becomes 100%.

9. The system of claim 2, wherein the bubbler is configured to form flue gas micro bubbles by using the flue gas.

10. The system of claim 2, wherein the primary reactor further comprises:
a monitoring part configured to monitor a level and a pH of the basic alkali mixture solution in the absorption column; and
a controller configured to adjust a supply amount of the basic alkali mixture solution by the monitoring part.

11. The system of claim 1, wherein the carbon dioxide reaction product comprises sodium carbonate (Na₂CO₃), sodium bicarbonate (NaHCO₃), or potassium carbonate (K₂CO₃).

12. The system of claim 1, wherein a pH meter is further provided adjacent to the outlet of the secondary reactor, and a pH inside the secondary reactor is monitored in real time by the pH meter.

13. The system of claim 1, wherein the dehydrator comprises:
a discharge pipe connected to the outlet of the secondary reactor;
a separation membrane provided in a hollow of the discharge pipe and provided with a plurality of filter holes so that the carbonate solution containing carbonate powder having a particle size equal to or less than a predetermined particle size is filtered and extracted, the carbonate solution being precipitated from the secondary reactor; and
a drying part configured to remove moisture by spraying dry air to the carbonate solution that has passed through the separation membrane, thereby acquiring carbonate powder.

14. The system of claim 13, wherein vibration is continuously or selectively applied to the separation membrane, thereby detaching carbonate powder trapped in the filter holes from the filter holes or preventing carbonate powder from being trapped in the filter holes.

15. The system of claim 1, wherein a flow rate control pump for controlling a flow rate or a flow speed of the carbon dioxide reaction product introduced into an inlet of the secondary reactor is further provided between the primary reactor and the secondary reactor.

16. The system of claim 2, wherein, in the absorption column, carbon dioxide transferred from the flue gas in the ship is atomized into micro bubbles by passing through a mesh net mounted on the lower portion of the absorption column, the basic alkali mixture solution supplied inside the absorption column from the mixer through a pipe is sprayed upwardly as a fountain shape through a plurality of nozzles which is mounted on a first side of the pipe and which is disposed to be spaced apart from each other at a predetermined distance and then the basic alkali mixture solution is atomized into micro droplets, and carbon dioxide is captured as the basic alkali mixture solution that is atomized reacts with carbon dioxide that is atomized, the pipe being mounted such that the pipe crosses an upper portion of the absorption column.

17. The system of claim 1, wherein the secondary reactor is a tube bent in a generally zigzag shape.
